# DEMANDE DE BREVET EUROPEEN

(11) **EP 2 902 763 A1**
(43) Date de publication de la demande: **05.08.2015**
(21) Numéro de dépôt: 15153135.7
(22) Date de dépôt: 29.01.2015
(51) Int. Cl.: G01K 17/20

(54) **Capteur à influence réduite pour la mesure d'un flux thermique**

(30) Priorité: 29.01.2014 FR 1450710
(71) Demandeur: Institut de Recherche Technologique Jules Verne, 44340 Bouguenais (FR)
(72) Inventeur: Delaunay, Didier, 44300 Nantes (FR); Gueroult, Sébastien, 44300 Nantes (FR); Boyard, Nicolas, 44240 La Chapelle sur Erdre (FR); Bailleul, Jean-Luc, 44170 Abbaretz (FR)
(74) Mandataire: Hamann, Jean-Christophe

(57) **Abrégé**

L'invention concerne un capteur pour la mesure d'un flux thermique dont le corps d'épreuve (100) comporte :
a. une thermopile (110) comportant une pluralité de jonctions (117) discrètes, prise entre deux couches (111, 112), dite de passivation, non conductrices électriquement ;
b. un collecteur (120) thermiquement conducteur lié à une face de la thermopile (110) ;
c. un substrat (130) thermiquement conducteur lié à l'autre face de la thermopile (110) ;
d. des moyens (121, 131) pour créer une constriction du flux thermique entre le collecteur (120) et le substrat (130) ;
e. caractérisé en ce qu'il comporte un bloc, dit bloc (140) de correction sans constriction, en contact mécanique et thermique avec le substrat (130).

## Description

L'invention concerne un capteur à influence réduite pour la mesure d'un flux thermique. L'invention est plus particulièrement, mais non exclusivement, destinée à l'étude, la mise au point et le contrôle de procédés mettant en oeuvre une transformation de la matière sous l'effet de la température. Plus spécifiquement, l'invention est adaptée à la mise au point et au contrôle de la mise en oeuvre de matériaux comprenant une phase polymère, thermodurcissable ou thermoplastique, renforcée ou non par une phase de renfort.

Une pièce constituée d'un matériau comprenant une matrice polymère est couramment réalisée selon un ou plusieurs procédés mettant en oeuvre une transformation dudit matériau sous l'effet de la chaleur. À titre d'exemples non limitatifs, le moulage, l'infusion ou le transfert de résine, la cuisson ou la consolidation sont des procédés mettant en oeuvre une telle transformation. La qualité des pièces obtenues tant en termes dimensionnels, que d'aspect ou de propriétés mécaniques ou physico-chimiques dépend en grande partie de l'histoire thermique subie par le matériau, laquelle dépend de l'environnement dans lequel l'opération de transformation est réalisée. Ainsi, lors des phases de développement, au cours de la mise au point du procédé ou encore pour le contrôle des conditions de mise en oeuvre du procédé, il est utile d'avoir accès à des informations relatives à cette histoire thermique et notamment de mesurer les flux thermiques en différents points de la pièce ou de ses moyens de mise en oeuvre. De telles mesures permettent de décrire les flux thermiques en intensité et en direction dans la matière au cours de sa mise en oeuvre, et ainsi d'en déduire l'histoire thermique de la matière. Un flux thermique est mesuré au moyen d'un capteur dit fluxmètre thermique.

Le document FR 2 704 979 décrit un exemple de réalisation d'un tel fluxmètre. Selon ce mode de réalisation de l'art antérieur, le corps d'épreuve d'un tel capteur comporte un substrat électriquement isolant sur lequel s'étend un circuit électrique, dit thermopile, constitué d'un premier dépôt sur ledit substrat, d'un fil ou d'un ruban continu d'un matériau conducteur ou semi-conducteur présentant une première résistivité thermique, par exemple un alliage de cuivre et de nickel couramment connu sous la désignation de constantan. Ledit fil ou ruban est recouvert par un second dépôt consistant en un ensemble discret de tronçons d'un matériau électriquement conducteur de résistivité très inférieure à celle du matériau constituant le ruban, par exemple de l'or ou du cuivre. Ainsi chaque tronçon de ce second dépôt constitue une électrode dont la jonction avec le ruban est susceptible de générer un effet thermoélectrique, connu sous le nom d'effet Seebeck, lorsque deux jonctions de ce type connectées électriquement sont soumises à des températures différentes. Pour constituer le fluxmètre thermique, le substrat et la thermopile sont placés entre deux feuilles thermiquement conductrices, l'une étant placée sous le substrat et, selon un exemple de réalisation, la feuille supérieure, dite collecteur, comporte des bossages, également dénommés cales, qui lorsque ladite feuille est placée sur la partie supérieure de la thermopile, entrent en contact mécanique avec une partie des électrodes du second dépôt, sans contacter le premier dépôt. Ainsi, les électrodes en contact avec un bossage sont portées à une température proche de celle de la feuille supérieure et, si cette feuille supérieure est à une température plus élevée que la feuille inférieure, le flux de chaleur progresse en passant par les jonctions entre ces électrodes et le premier dépôt puis le substrat jusqu'à la feuille inférieure. Les électrodes qui ne sont pas en contact avec un bossage sont, selon cet exemple de réalisation, à une température inférieure, et l'effet thermoélectrique qui résulte de cette différence de température, qui existe entre les jonctions dites chaudes et les jonctions dites froides, est proportionnel au flux de chaleur entre les deux feuilles du capteur. D'autres modes de réalisation sont connus de l'art antérieur, le principe général consistant à créer un passage privilégié du flux thermique par certaines jonctions entre les deux dépôts, de sorte à générer un gradient de température entre les jonctions distribuées de manière connue pour en déduire le flux thermique par la mesure de la force électromotrice délivrée par l'effet thermoélectrique. Le mode de réalisation de l'art antérieur exposé ci-avant est dit à « simple constriction » du flux thermique, ledit flux étant contraint, selon une progression sensiblement normale au collecteur, de s'écouler à travers le fluxmètre par des chemins de conduction dirigés par les cales coopérant avec le collecteur. Un effet similaire est obtenu en utilisant un collecteur en contact continu avec la thermopile mais en ménageant des chemins dirigés dans la feuille inférieure.

Le document WO 2012/004286 décrit un fluxmètre thermique à « double constriction » dans lequel le flux thermique et contraint de suivre, selon une direction sensiblement normale au collecteur, des chemins de conduction discrets à la fois entre le collecteur et la thermopile et dans la feuille inférieure, celle-ci étant par ailleurs en contact continu avec la thermopile.

Ainsi, un fluxmètre thermique constitue un pont thermique ou pour le moins un passage dirigé du flux thermique entre les deux faces de son corps d'épreuve, encourageant le passage de ce flux selon une répartition discrète et généralement périodique à sa surface. Ainsi, la présence même de ce type capteur est susceptible de modifier le mode d'écoulement de la chaleur et de fausser toute prévision réalisée à partir de cette mesure. Ceci est d'autant plus sensible que la surface du fluxmètre thermique est importante et que le différentiel de température entre les deux faces du corps d'épreuve est important. Or, dans certaines circonstances, notamment lorsque la mesure du flux thermique vise à maîtriser les conditions de transformation d'une matière plastique, de faibles modifications locales des conditions de chauffage ou de refroidissement de la matière sont susceptibles d'engendrer des défauts d'aspect importants voire des modifications des propriétés mécaniques de la matière. Ainsi, la présence d'un tel capteur dans un outillage est susceptible de poser plus de défauts qu'elle ne permettrait potentiellement d'en éliminer par la promesse d'un contrôle accru de la thermique du procédé, ou encore, les prévisions établies à partir de telles mesures sont susceptibles de conduire à des résultats ou des recommandations erronées.

L'invention vise à résoudre les inconvénients de l'art antérieur et concerne à cette fin, un capteur pour la mesure d'un flux thermique, capteur dont le corps d'épreuve comporte :
a. une thermopile comportant une pluralité de jonctions discrètes, prise entre deux couches, dite de passivation, non conductrices électriquement ;
b. un collecteur thermiquement conducteur lié à une face de la thermopile ;
c. un substrat thermiquement conducteur lié à l'autre face de la thermopile ;
d. des moyens pour créer une constriction du flux thermique entre le collecteur et le substrat ;
e. un bloc, dit bloc de correction, sans constriction, en contact mécanique et thermique avec le substrat.

Ainsi, le bloc de correction permet, en fonction de son épaisseur et du matériau qui le constitue de corriger le flux thermique, déformé par la présence du fluxmètre dans lequel il pénètre par le collecteur, et ainsi de réduire l'influence dudit fluxmètre sur les phénomènes thermiques mesurés.

L'invention est avantageusement mise en oeuvre selon les modes de réalisation exposés ci-après lesquels sont à considérer individuellement ou selon toute combinaison techniquement opérante.

Selon un mode réalisation avantageux le substrat et le bloc de correction sont constitués d'un matériau dont la conductivité thermique est supérieure à 300 W/m.K .

Ainsi, la forte conductivité thermique du substrat et du bloc de correction permet de corriger le flux thermique sur une faible épaisseur.

Avantageusement le fluxmètre objet de l'invention comporte :
f. une fine couche d'un matériau dont la conductivité thermique est inférieure à 1 W/m. K, recouvrant la paroi extérieure du substrat et du bloc de correction.

Ainsi, cette couche de faible conductivité thermique permet de bien diriger le flux thermique ayant traversé la thermopile dans l'épaisseur du substrat et du bloc de correction.

Avantageusement, le capteur objet de l'invention comporte :
g. une coque de protection apte à résister à la pression dans laquelle est inséré le corps d'épreuve.

Ainsi le capteur objet de l'invention est apte à être inséré dans un moule ou dans un outillage de transformation d'une matière plastique ou d'un matériau composite.

Selon un mode de réalisation particulier du capteur objet de l'invention, les moyens de constriction du flux thermique comprennent :
di. des cales, dites cales supérieures, thermiquement conductrices en contact mécanique entre le collecteur et l'une des couches de passivation au niveau d'une partie des jonctions de la thermopile, le volume compris entre deux cales et le collecteur étant rempli d'un matériau thermiquement isolant
dii. des cales, dites cales inférieures, thermiquement conductrices, en contact mécanique entre le substrat et l'autre couche de passivation au niveau d'une partie des jonctions de la thermopile, le volume compris entre deux cales et le substrat étant rempli d'un matériau thermiquement isolant, la zone de contact entre une cale inférieure ou supérieure et la thermopile étant en vis-à-vis d'une zone remplie par un isolant du collecteur ou du substrat respectivement.

Ainsi, le corps d'épreuve dudit capteur utilise une double constriction du flux thermique, ce qui permet d'augmenter la sensibilité dudit capteur en sollicitant simultanément plus de jonctions de la thermopile. La réalisation de la constriction au niveau du substrat, par le positionnement des cales entre ledit substrat et la thermopile permet une ré-homogénéisation du flux thermique dans le substrat et le bloc de correction sur une distance plus courte. Le comblement des volumes entre les cales permet de rigidifier les moyens de constriction du flux, plus particulièrement le collecteur, sans augmenter l'inertie thermique du corps d'épreuve vis-à-vis du flux thermique, et ainsi de conserver un capteur réactif et sensible.

Avantageusement, les couches de passivation sont constituées de nitrure de silicium (Si₃N₄). Ce matériau offre une excellente isolation électrique et une résistance à haute température et aux chocs thermiques. Ainsi, le capteur objet de l'invention est adapté pour une utilisation à une température correspondant celle de la mise en oeuvre à chaud des polymères thermoplastiques ou thermodurcissables.

L'invention concerne également un outillage pour la transformation à chaud d'un matériau lequel outillage comprend une forme, et qui comporte un capteur selon une quelconque combinaison des modes de réalisation précédents, débouchant dans ladite forme. Ainsi, l'outillage objet de l'invention permet de mesurer un flux thermique local au cours de l'opération de transformation du matériau.

Avantageusement, la coque de protection du corps d'épreuve du capteur de l'outillage objet de l'invention est constituée du même matériau que celui en constituant la forme. Ainsi, la présence du capteur ne perturbe pas, ou très peu, les conditions rhéologiques de la transformation du matériau.

L'invention concerne également un procédé pour la fabrication d'un outillage selon l'invention, lequel procédé comporte des étapes consistant à :
i. réaliser une maquette numérique, dite initiale, de l'outillage ne comprenant pas le capteur ;
ii. simuler les transferts thermiques dans la maquette initiale afin d'obtenir un flux thermique théorique à l'emplacement prévu du capteur ;
iii. intégrer une maquette numérique du capteur dans la maquette initiale, laquelle maquette numérique comprend l'épaisseur du bloc de correction comme paramètre variable ;
iv. simuler les transfert thermique dans la maquette obtenue à l'étape iii) et comparer le flux thermique théorique obtenu à l'étape ii) avec le flux thermique calculé en présence de la maquette numérique du capteur ;
v. modifier l'épaisseur du bloc de correction dans la maquette numérique du capteur et reprendre à l'étape iii) jusqu'à ce que la comparaison des flux thermiques à l'étape iv) fournisse une différence relative inférieure à un seuil déterminer entre les deux flux thermiques théoriques ;
vi. réaliser l'outillage en intégrant à celui-ci un capteur dont le corps d'épreuve correspond au dimensionnement obtenu à l'issu de l'étape v).

Ainsi, la présence du capteur, optimiser par l'intermédiaire de l'épaisseur du bloc de correction, ne modifie pas la réponse thermique locale de l'outillage et n'introduit pas de singularité de comportement de l'outillage.

Selon un mode de réalisation avantageux du procédé objet de invention, l'étape vi) comprend l'usinage de la surface de la forme de l'outillage alors que le capteur est installé dans ledit outillage. Ainsi l'état de surface de la zone de mesure est le même que celui du reste de la forme et la surface du capteur est parfaitement affleurante à ladite forme.

L'invention concerne également l'utilisation d'un outillage selon l'un quelconque des modes de réalisation de l'outillage selon l'invention, pour la fabrication d'une pièce constituée d'un matériau composite comprenant une matrice en polymère et dont le processus de fabrication comprend :
- une étape de cuisson dans un moule comprenant ledit outillage ; ou
- une étape de consolidation dans un moule comprenant ledit outillage ; ou
- une étape de remplissage par un polymère liquide d'un moule comprenant ledit outillage.

La présence du capteur selon l'invention judicieusement positionné dans ledit moule permet, selon le type de série, de piloter plus finement le procédé, ou lorsque les conditions de mise en oeuvre du procédé ont été optimisées, de surveiller ledit procédé, par exemple dans le cadre d'un processus d'assurance qualité.

Le terme cuisson, s'agissant d'un polymère thermodurcissable, indique une étape de polymérisation obtenue par un maintien du matériau à une température donnée.

Le terme consolidation, s'agissant d'un matériau thermoplastique désigne un procédé dans lequel ledit polymère est porté à sa température de fusion puis refroidi en contrôlant le volume occupé par le matériau durant ces phases.

Le terme remplissage s'agissant d'un polymère à l'état liquide, désigne, sans être exhaustif, un procédé d'injection, par exemple d'un polymère thermoplastique dans une moule, un procédé de transfert ou d'infusion de résine, par exemple dans le cas d'un polymère thermodurcissable.

L'invention est exposée ci-après selon ses modes de réalisation préférés, nullement limitatifs, et en référence aux figures 1 à 7 dans lesquelles :
- la figure 1 représente selon une vue de face en coupe AA définie figure 2 et en éclaté, un exemple de réalisation d'un corps d'épreuve du capteur objet de l'invention ;
- la figure 2 montre le corps d'épreuve de la figure 1, selon une vue de dessus sans le collecteur ;
- la figure 3 est une vue partielle de face et en coupe AA du corps d'épreuve montrant la constriction du flux thermique entre le collecteur et le substrat ;
- la figure 4 représente un exemple de réalisation du capteur objet de l'invention selon une vue de face en coupe A-A ;
- la figure 5 illustre, selon une vue de face en coupe AA, un exemple d'installation du capteur objet de l'invention dans un outillage ;
- la figure 6 est un synopsis d'un exemple de réalisation du procédé de fabrication selon l'invention ;
- la figure 7 montre un exemple d'utilisation d'un outillage selon l'invention, figure 7A, selon une coupe AA dudit outillage comprenant la pièce à transformer, et représente figures 7B et 7C des exemples de tracés simulés du flux thermique à la localisation du capteur de flux objet de l'invention, avec ou sans l'installation dudit capteur dans l'outillage.

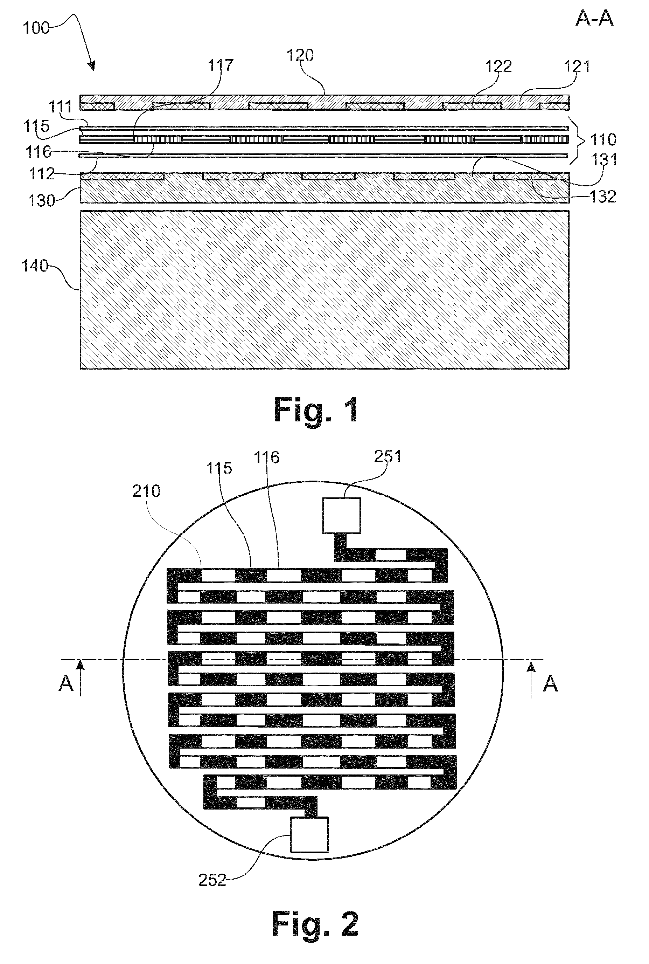

Figure 1, selon un exemple de réalisation du corps d'épreuve (100) du capteur objet de l'invention, celui-ci comprend une thermopile (110) comprenant une pluralité de jonctions (117) discrètes entre deux matériaux (115, 116), disposés selon une piste prise en sandwich entre deux couches (111, 112) de passivation, constituées de nitrure de silicium (Si₃N₄). Les matériaux (115, 116) assemblés afin de constituer les jonctions (117) de la piste de la thermopile (110) sont des matériaux conducteurs ou semi-conducteurs de conductivités thermiques différentes. À titre d'exemple non limitatif les matériaux constituant la piste sont constitués de constantan, alliage de cuivre (Cu) et de nickel (Ni) et de d'or (Au). Bien que les matériaux (115, 116) assemblés afin de constituer des jonctions (117) soient ici représentés juxtaposés afin d'en simplifier la représentation, cette disposition n'est pas limitative de l'invention et toute disposition connue de l'art antérieur ou procurant un effet technique équivalent est utilisable. Les couches (111, 112) de passivation, électriquement isolantes permettent d'obtenir une mesure de tension aux bornes de la piste, sans perte électrique dans le reste du corps d'épreuve (100). Les couches de passivation assurent aussi la tenue mécanique de la piste. Le collecteur (120) constitué de cuivre et par lequel le flux thermique objet de la mesure entre dans le corps d'épreuve (100) est fixé à la thermopile (110) sur l'une de des faces de ladite thermopile. Ledit collecteur comprend sur sa face en contact avec ladite pile, des bossages (121) ou cales supérieures qui entrent en contact avec la thermopile au droit d'une jonction (117) sur deux. Selon cet exemple de réalisation, lesdites cales (121) supérieures viennent de matière avec le collecteur (120) dont elles constituent des bossages, selon un autre mode de réalisation lesdites cales (121) sont des éléments rapportés. Le volume (122) compris entre deux cales (121) et le collecteur (120) est comblé par un polymère thermiquement isolant, et résistant à la température d'utilisation du capteur, par exemple un polyimide. Alternativement le volume entre les cales (121) n'est pas comblé. Toutefois, le comblement de ce volume (122) par un matériau résistant à la température d'utilisation du capteur, tel un polyimide thermiquement isolant, permet de rigidifier le collecteur, et ainsi de réduire son épaisseur, sans modifier significativement l'inertie thermique de l'assemblage. Ainsi le capteur est plus réactif.

La constitution du substrat (130), en contact avec la face opposée de la thermopile (110), est, selon cet exemple de réalisation, similaire à celle du collecteur. Ainsi, ledit substrat (130) comprend des cales (131) inférieures, venant de matière avec le substrat dont elles constituent des bossages selon ce mode de réalisation. Le volume (132) compris entre deux cales (131) successives et le substrat (130) est comblé par un polymère thermiquement isolant résistant à la température d'utilisation du capteur, par exemple un polyimide.

À titre d'exemple non limitatif, le collecteur et le substrat sont constitués de cuivre et les cales supérieures et inférieures sont obtenues par des techniques de gravure chimique similaires aux techniques d'obtention des circuits imprimés.

Selon un autre exemple de réalisation, le polyimide isolant, par exemple un polyimide PMDA/ODA de dianhydride pyromellitique et d'éther4,4'-diaminodiphénylique, est déposé sur la thermopile par enduction centrifuge, ou « *spin coating* », puis ledit polyimide est gravé par photolithographie. Les cales sont déposées dans les cavités ainsi gravées par des techniques de dépôt métallique.

Selon un exemple de réalisation l'épaisseur de cale est comprise 50 µm (50.10⁻⁶ m) à 70 µm (70. 10⁻⁶ m), l'épaisseur de la feuille supérieure du collecteur (120) est de 5 µm (5.10⁻⁶ m). Les couches de passivation ont une épaisseur de 0,2 µm, l'épaisseur du substrat (130) est de 1 mm. Selon cet exemple de réalisation, ledit capteur est apte à produire des mesures jusqu'à 500 °C, avec une sensibilité de l'ordre de 3 V/(W.m⁻²).

Les cales (121) supérieures et les cales (131) inférieures sont placées en quinconce de sorte qu'une cale (131) inférieure arrivant au droit d'une jonction (117) de la thermopile se trouve en vis-à-vis d'une zone (122) thermiquement isolante du collecteur et qu'une cale (121) supérieure se trouve en vis-à-vis d'une zone isolante (132) du substrat (130). Ainsi, le positionnement relatif des cales (121) supérieures et des cales (131) inférieures réalise une double constriction du flux thermique traversant la thermopile (110). Un bloc (140) de correction est lié au substrat (130). Selon des variantes de réalisation, ledit bloc (140) de correction est un bloc rapporté ou vient de matière avec le substrat.

Figure 2, selon cet exemple de réalisation la piste (210) de la thermopile s'étend en méandre à la surface du corps d'épreuve. Ladite piste (210) est réalisée par des techniques similaires à celle de la réalisation de circuits imprimés. D'autres technologies sont utilisables selon la nature des matériaux constituant la piste et la finesse de détail désirée, à titre d'exemple non limitatif, ladite piste est réalisable en micro ou en nano-impression ou par dépôt capillaire convectif. Selon un exemple de réalisation, la piste (210) est réalisée par un premier dépôt (115) de constantan d'une largeur de 40 µm (40.10⁻⁶ m) et d'une épaisseur de 0,6 µm, sur lequel sont déposés des tronçons (116) d'or d'une longueur de 200 µm, de largeur 40 µm et d'une épaisseur de 0,3 µm. Le matériau dont la conductivité électrique est la plus élevée, en l'occurrence l'or, étant déposé sur le matériau dont la conductivité électrique est la plus faible, en l'occurrence le constantan. Selon cet exemple de réalisation, une fine couche de titane (non représentée), d'une épaisseur d'environ 0,1 µm est déposée sur la piste de constantan préalablement au dépôt d'or afin d'éviter toute diffusion de l'or dans le constantan. Des connecteurs (251, 252) d'or sont disposés à chaque extrémité de la piste en continuité électrique avec celle-ci et permettent de mesurer la force électromotrice produite par l'effet Seebeck entre les jonctions chaudes et les jonctions froides de ladite piste.

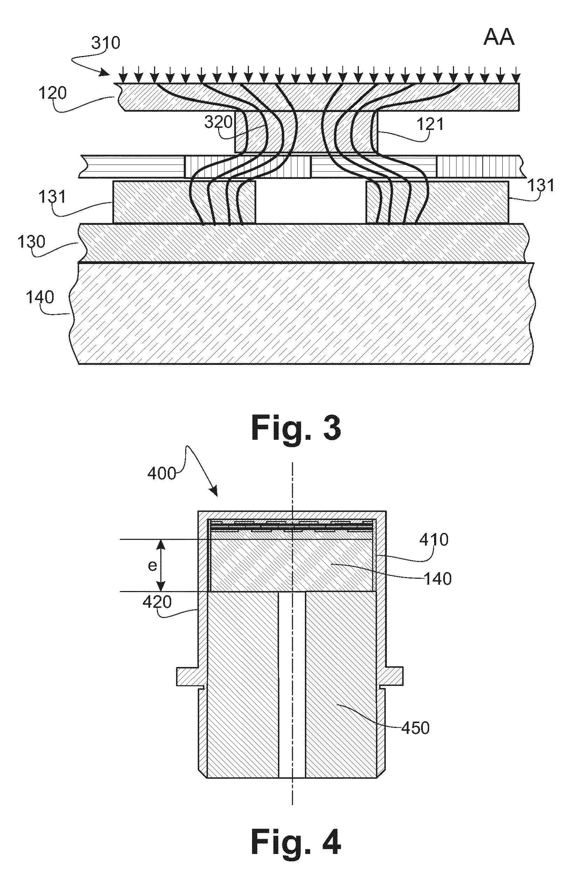

Figure 3, les couches de passivation et les volumes isolants entre les cales inférieures et supérieures ont été omis pour faciliter la lecture du dessin. Lorsque le corps d'épreuve est soumis à un flux thermique (310) normal au collecteur (120), l'écoulement de la chaleur à travers le corps d'épreuve suit les chemins de plus forte conductivité thermique dessinés par les cales (121, 131) supérieures et inférieures, de sorte que les lignes de flux (320) font l'objet d'une double constriction jusqu'à rejoindre le substrat (130). Puis le flux de chaleur s'écoule dans le substrat et dans le bloc (140) de correction, tous deux constitués d'un matériau dont la conductivité thermique est supérieure à 300 W/m.K, tel que du cuivre. Ainsi, sans être lié par une quelconque théorie, le flux thermique, resserré par les cales (121, 131), s'homogénéise à nouveau en progressant dans l'épaisseur du bloc (140) de correction. Selon un exemple de réalisation particulier, le bloc (140) de correction a une épaisseur (e) de 7 mm. D'un point de vue pratique le phénomène est plus complexe car il fait intervenir des interactions multiples et la détermination d'une épaisseur (e) optimale du bloc (140) de correction pour une application donnée fait intervenir une simulation numérique de ladite application. Ainsi, contrairement aux préjugés de l'art antérieur qui pour réduire l'influence du capteur sur la déformation du flux thermique, vise un capteur dont le corps d'épreuve est le plus fin possible, l'invention résout ce problème technique en augmentant l'épaisseur du corps d'épreuve tout en conservant une faible inertie thermique dans la zone de production de l'effet Seebeck.

Figure 4, selon un exemple de réalisation, le corps d'épreuve (100) du capteur (400) objet de l'invention est glissé dans une première gaine (410) constituée d'un matériau dont la conductivité thermique est inférieure à 1 W/m.K, par exemple un polyimide d'une épaisseur de 0,2 mm. L'ensemble est inséré dans une coque (420) constituée d'un matériau similaire à celui du dispositif dans lequel est installé le capteur, par exemple un acier. Cette coque de protection mécanique protège également le capteur du contact corrosif des matériaux mis en oeuvre.

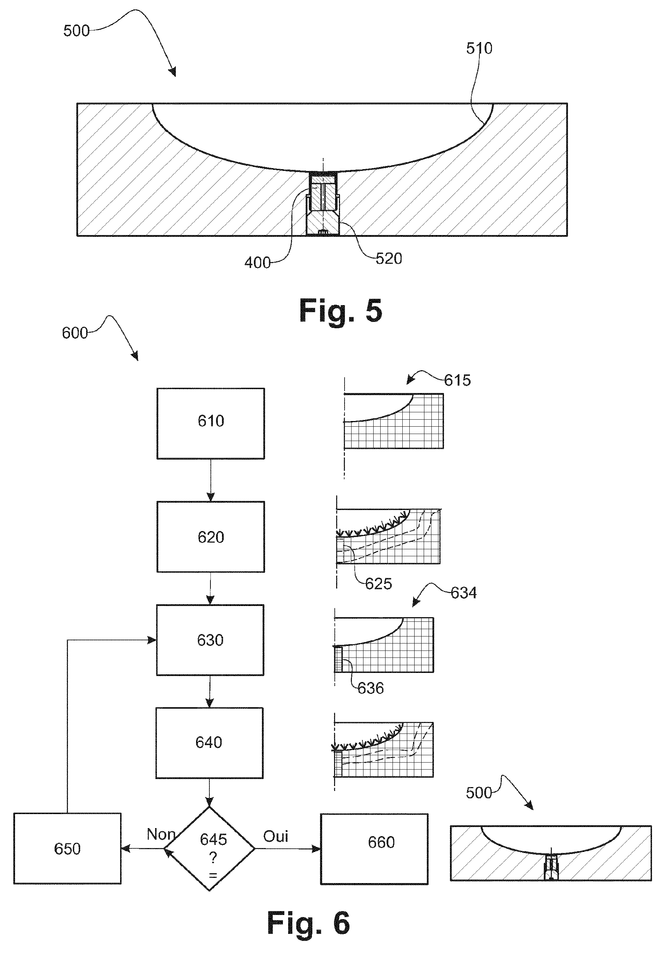

Figure 5, selon un exemple de réalisation, le capteur (400) objet de l'invention est utilisé pour mesurer le flux thermique dans la forme (510) d'un outillage (500) au cours de la réalisation d'une pièce mettant en oeuvre la transformation d'un polymère. Selon cet exemple de réalisation, le capteur (400) est fixé au moule par des moyens (520) mécaniques dans un alésage épaulé de sorte que le sommet du capteur (400), côté collecteur du corps d'épreuve, soit affleurant dans la forme (510). Selon un mode de réalisation particulier, le capteur (400) est installé dans l'outillage (500) et une passe d'usinage de finition de la forme est réalisée avec le capteur (400) ainsi installé. Ainsi, la surface du capteur est parfaitement affleurante avec la surface de la forme et présente le même état de surface.

Figure 6, le procédé objet de l'invention vise à minimiser l'influence de la présence du capteur dans un outillage sur l'écoulement des flux thermiques depuis la forme en contact de laquelle se trouve la matière transformée. Selon un exemple de réalisation, le procédé objet de l'invention comprend une première étape de conception (610) consistant à obtenir une maquette numérique (615) de l'outillage dont l'étude est prévue. Cette première maquette numérique, ou maquette initiale, ne comprend pas le capteur, elle tire avantageusement parti des éventuelles symétries de l'outillage de sorte à réduire le poids numérique de ladite maquette. Selon une deuxième étape (620) de calcul les flux de chaleur dans l'outillage sont calculés par simulation dans des conditions correspondant à la mise en oeuvre visée. Ladite simulation est réalisée au moyen de tout logiciel de simulation thermique, notamment par éléments finis, après avoir réalisé un maillage adapté de la maquette numérique. Cette étape de simulation permet de déterminer les flux de chaleur à l'emplacement (625) prévu du capteur lorsque ce capteur n'est pas installé dans l'outillage et que les aménagements tels que l'alésage pour son introduction ne sont pas non plus réalisés. Au cours d'une étape de re-conception (630) une nouvelle maquette (635) numérique est créée, qui intègre un modèle (636) numérique du capteur.

En revenant à la figure 4, le capteur (400) objet de l'invention comprend un bloc (140) de correction d'épaisseur (e) maintenu par des moyens (450) appropriés contre le substrat du corps d'épreuve. Selon un mode de réalisation alternatif, le bloc (140) de correction et le substrat forment une seule et même pièce. Les moyens (450) de maintien du corps d'épreuve dans le capteur sont réglables de sorte que ledit capteur (400) est configurable avec différents corps d'épreuve comportant des blocs (140) de correction ou des substrats d'épaisseurs différentes.

En revenant à la figure 6, le modèle (636) numérique du capteur introduit dans la nouvelle maquette (635) numérique est représentatif des propriétés thermiques : conductivités, capacité calorifique, masse volumique etc. du capteur intégrant un bloc de correction d'une épaisseur donnée. Au cours d'une étape de simulation (640) le calcul des flux thermiques dans l'outillage est réalisé pour des conditions de sollicitation thermique identiques à celle utilisées lors de l'étape de calcul (620) mais en intégrant cette fois le modèle numérique (636) du capteur. Les flux calculés sont ainsi modifiés par la présence de ce modèle numérique. Au cours d'une étape (645) de comparaison, le flux thermique calculé à l'emplacement (625) du capteur au cours de la simulation conduite avec la maquette (615) initiale, est comparé au flux thermique calculé dans le modèle (636) du capteur au cours de l'étape (640) de simulation conduite avec la maquette (635) numérique modifiée. Si les flux calculés au cours de ces deux simulations sont jugés suffisamment similaires, alors, au cours d'une étape (660) de fabrication l'outillage est réalisé comprenant un capteur dont l'épaisseur du bloc de correction a été prise en compte au cours de la dernière étape (640) de simulation. Si, par contre, les flux calculés au cours des deux étapes (620, 640) sont très différents, alors, au cours d'une étape d'optimisation (650) un nouveau modèle numérique du capteur est généré, celui-ci intégrant des propriétés thermiques correspondant à une épaisseur différente du bloc de correction. Ce nouveau modèle numérique du capteur est introduit dans la maquette numérique au cours de l'étape de conception (630) et les étapes sont reprises de sorte à créer une boucle d'optimisation ayant comme variable essentielle, l'épaisseur du bloc de correction du capteur. Ainsi, l'épaisseur optimale du bloc de correction dudit capteur, qui ne modifie pas le flux thermique en comparaison de l'outillage sans capteur est déterminée. Le procédé objet de l'invention permet selon d'autres exemples d'optimisation et selon un principe similaire, d'optimiser d'autres paramètres du capteur ou de viser d'autres résultats que l'identité des flux aux deux étapes (620, 640) de simulation.

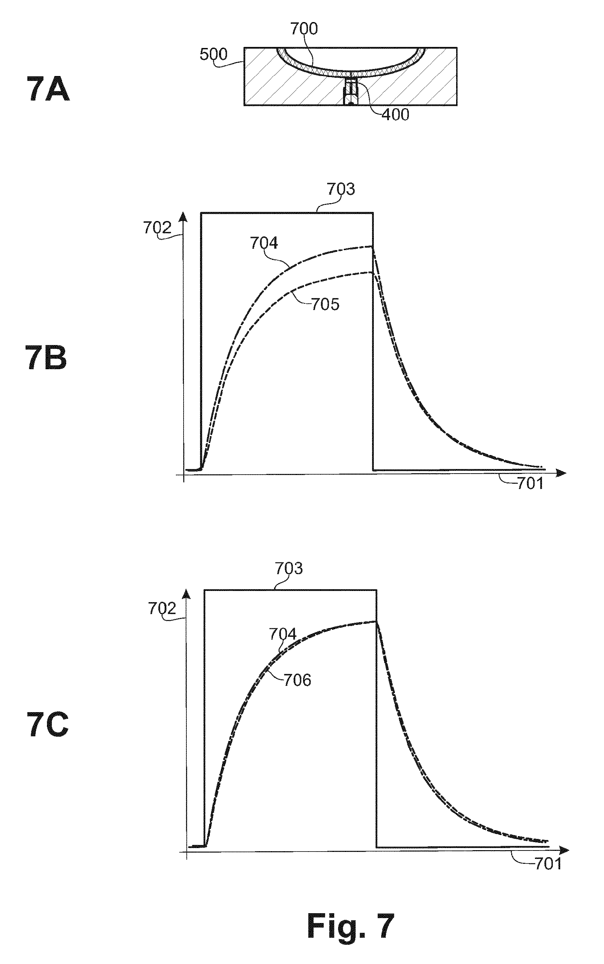

Figure 7, à titre d'exemple l'outillage (500) objet de l'invention est utilisé pour la fabrication d'une pièce en composite à matrice thermodurcissable, dont le processus de fabrication comprend la cuisson d'une préforme (700) ladite pièce en autoclave dans un moule (500) ouvert. Pour simplifier la représentation, les équipements d'ensachage ont été omis figure 7A. À titre d'exemple non limitatif ladite préforme (700) est constituée d'une stratification de plis fibreux, comprenant par exemple des fibres de carbone, obtenue par drapage de bandes préimpégnées dudit polymère thermodurcissable à l'état cru par exemple une résine époxyde. L'étape de cuisson permet la polymérisation de la résine, elle est réalisée selon un cycle de chauffage-refroidissement et de pression précis. Le contrôle de ces conditions permet de contrôler la cinétique de polymérisation.

Selon cet exemple de réalisation, le contrôle des conditions de cuisson de la préforme (700) en matériau composite est avantageusement réalisé au moyen d'un capteur (400) selon l'invention, judicieusement disposé dans le moule (500). Ainsi, l'outillage (500) objet de l'invention est avantageusement utilisé pour contrôler le cycle de cuisson et notamment pour viser des cycles dits « de cuisson rapide » sans perte de qualité pour la pièce ainsi obtenue.

Figure 7B, au cours de la conception de l'outillage selon le procédé objet de l'invention, le flux thermique à l'emplacement de l'outillage où le capteur est installé et d'abord calculé sans la présence de ce capteur, en fonction d'un flux (703) incident correspondant au procédé de mise en oeuvre. Ainsi, selon un diagramme temps (701), température (702) mesurée en un point, ce flux (704) étalon donne le flux mesuré en ce point sans capteur. Le capteur est ensuite intégré au modèle thermique et le flux (705) mesuré en ce même point en présence du capteur, diffère significativement du flux (705) étalon.

Figure 7C, après avoir lancé la boucle d'optimisation du procédé objet de l'invention, l'épaisseur du bloc de correction est optimisée, de sorte que lors de la simulation le flux (706) calculé au même point et en présence du capteur, ou plus précisément de son modèle numérique, correspond au flux étalon (704).

Selon des principes similaires, l'outillage objet de l'invention est avantageusement utilisé pour contrôler la consolidation d'une stratification de plis fibreux comprenant un polymère thermoplastique. La consolidation d'un composite comprenant une matrice constituée d'un polymère thermoplastique comprend essentiellement trois phénomènes :
- un phénomène essentiellement mécanique, qui sous l'effet de la pression et de la viscosité du polymère tend à créer un contact intime entre les plis ;
- un phénomène essentiellement chimique dit autohésion, qui entraîne une adhésion des plis entre eux par la diffusion des segments moléculaires à travers l'interface puis toute l'épaisseur des plis ;
- un phénomène d'écoulement du polymère, parfois dénommé imprégnation, et qui permet de remplir les vides fermés subsistant dans le matériau.

Lors de la mise en oeuvre d'un tel procédé la source de chaleur permettant d'obtenir la fusion du polymère est appliquée par l'extérieur de l'outillage, notamment en étuve ou en autoclave. La température de chauffage pour la consolidation d'un composite dont la matrice est un polymère thermoplastique à haute performance tel qu'un polyétheréthercétone, est de l'ordre de 400 °C. Le contrôle du flux thermique permet d'assurer que le polymère atteint bien sa température de fusion en tout point du moule et notamment dans des points critiques et ainsi d'assurer, notamment, que l'imprégnation est totale afin qu'il ne subsiste pas vide ou de porosité dans la pièce finie.

Un tel outillage est également utilisable dans le cadre d'un procédé comprenant le remplissage de la cavité d'un moule dont au moins une partie est réalisée par un outillage selon l'invention. Préalablement au remplissage, ladite cavité contient ou non une préforme fibreuse, laquelle préforme est imprégnée de la résine au moment de ce remplissage. Placé en un point judicieusement sélectionné, le capteur de l'outillage objet de l'invention permet de contrôler, d'une part, l'arrivée effective de la résine en ce point et d'autre part de contrôler le processus de solidification et de polymérisation qui suit cette opération de remplissage.

La description ci-avant et les exemples de réalisation montrent que l'invention atteint les objectifs visés, en particulier elle permet d'intégrer dans un outillage un capteur de flux thermique ne perturbant pas ledit flux en comparaison de l'outillage sans capteur. Ainsi, le capteur et le procédé objets de l'invention sont avantageusement utilisés dans le cadre du développement d'un outillage de série, ou pour le contrôle des paramètres du procédé mis en oeuvre par ledit outillage. Le choix des matériaux constituant le capteur permet d'utiliser celui-ci à des températures élevées, de l'ordre de 400 °C, correspondant aux températures de mise en oeuvre des polymères thermoplastiques à haute performance tels que le polyéthertéthercétone ou PEEK. L'utilisation d'une double constriction du flux dans le capteur permet une grande précision de mesure, précision nécessaire, par exemple, pour maîtriser les dynamiques de cristallisation du polymère ou les défauts d'aspect de surface de la pièce.

## Revendications

1. Capteur (400) pour la mesure d'un flux thermique dont le corps d'épreuve (100) comporte :
a. une thermopile (110) comportant une pluralité de jonctions (117) discrètes, prise entre deux couches (111, 112), dite de passivation, non conductrices électriquement ;
b. un collecteur (120) thermiquement conducteur lié à une face de la thermopile (110) ;
c. un substrat (130) thermiquement conducteur lié à l'autre face de la thermopile (110) ;
d. des moyens (121, 131) pour créer une constriction du flux thermique entre le collecteur (120) et le substrat (130) ;
e. **caractérisé en ce que** ledit capteur comporte un bloc, dit bloc (140) de correction, sans constriction, en contact mécanique et thermique avec le substrat (130).

2. Capteur (400) selon la revendication 1, dans lequel le substrat (130) et le bloc (140) de correction sont constitués d'un matériau dont la conductivité thermique est supérieure à 300 W/m.K ;

3. Capteur (400) selon la revendication 1, comportant :
f. une fine couche (410) d'un matériau dont la conductivité thermique est inférieure à 1 W/m.K, recouvrant la paroi extérieure du substrat (130) et du bloc (140) de correction.

4. Capteur selon la revendication 1, comportant :
g. une coque (420) de protection apte à résister à la pression dans laquelle est inséré le corps d'épreuve (100).

5. Capteur (400) selon la revendication 1 dans lequel les moyens de constriction du flux thermique comportent :
di. des cales, dites cales (121) supérieures, thermiquement conductrices, en contact mécanique entre le collecteur (120) et l'une des couches de passivation au niveau d'une partie des jonctions (117) de la thermopile, le volume (122) compris entre deux cales et le collecteur étant rempli d'un matériau thermiquement isolant ;
dii. des cales, dites cales (131) inférieures, thermiquement conductrices, en contact mécanique entre le substrat (130) et l'autre couche de passivation au niveau d'une partie des jonctions (117) de la thermopile, le volume (132) compris entre deux cales et le substrat étant rempli d'un matériau thermiquement isolant, la zone (131, 121) de contact entre une cale inférieure ou supérieure et la thermopile (110) étant en vis-à-vis d'une zone (122, 132) remplie par un isolant du collecteur ou du substrat respectivement

6. Capteur selon la revendication 1, dans lequel les couches (111, 112) de passivation son constituées de nitrure de silicium (Si₃N₄).

7. Outillage (500) pour la transformation à chaud d'un matériau, lequel outillage comprend une forme (510), **caractérisé en ce qu'**il comporte un capteur (400) selon l'une des revendications précédentes débouchant dans ladite forme (510).

8. Outillage selon la revendication 7, comportant un capteur selon la revendication 4, dans lequel la coque (410) de protection du corps d'épreuve (100) du capteur est constitué du même matériau que celui constituant la forme (510).

9. Procédé (600) pour la fabrication d'un outillage selon la revendication 7, **caractérisé en ce qu'**il comporte des étapes consistant à :
i. réaliser (610) une maquette numérique (615), dite initiale, de l'outillage ne comprenant pas le capteur ;
ii. simuler (620) les transferts thermiques dans la maquette initiale (615) afin d'obtenir un flux thermique (704) théorique à l'emplacement (625) prévu du capteur ;
iii. intégrer (630) une maquette numérique (636) du capteur dans la maquette initiale, laquelle maquette numérique comprend l'épaisseur (e) du bloc (140) de correction comme paramètre variable ;
iv. simuler (640) les transferts thermiques dans la maquette (635) obtenue à l'étape iii) et comparer le flux thermique (704) théorique obtenu à l'étape ii) avec le flux thermique (705) calculé en présence de la maquette numérique (636) du capteur ;
v. modifier (650) l'épaisseur du bloc de correction dans la maquette numérique du capteur et reprendre à l'étape iii) jusqu'à ce que la comparaison (645) des flux thermiques à l'étape iv) fournisse une différence relative inférieure à un seuil déterminé entre les deux flux thermiques (704, 706) théoriques ;
vi. réaliser (660) l'outillage en intégrant à celui-ci un capteur (400) dont le corps d'épreuve (100) correspond au dimensionnement obtenu à l'issu de l'étape v).

10. Procédé selon la revendication 9, dans lequel l'étape vi) comprend l'usinage de la surface de la forme (510) de l'outillage (500) alors que le capteur (400) est installé dans ledit outillage (500).

11. Utilisation d'un outillage (500) selon la revendication 7, pour la fabrication d'une pièce constituée d'un matériau composite comprenant une matrice en polymère thermodurcissable, dont le processus de fabrication comprend une étape de cuisson dans un moule comprenant ledit outillage.

12. Utilisation d'un outillage (500) selon la revendication 7, pour la fabrication d'une pièce constituée d'un matériau composite comprenant une matrice en polymère thermoplastique, dont le processus de fabrication comprend une étape de consolidation dans un moule comprenant ledit outillage.

13. Utilisation d'un outillage (500) selon la revendication 7, pour la fabrication d'une pièce, dont le processus de fabrication comprend une étape de remplissage par un polymère liquide d'un moule comprenant ledit outillage.
